# EUROPÄISCHE PATENTSCHRIFT

(11) **EP 1 060 652 B1**
(45) Veröffentlichungstag und Bekanntmachung des Hinweises auf die Patenterteilung: **25.08.2004**
(21) Anmeldenummer: 00110568.3
(22) Anmeldetag: 18.05.2000
(51) Int. Cl.: A01F 15/08

(54) **Antrieb für eine Kolbensammelpresse für landwirtschaftliche Erntegüter**
Drive for a plunger press for agricultural produce
Entraînement pour une presse à piston pour produits agricoles

(30) Priorität: 12.06.1999 DE 19926827
(43) Veröffentlichungstag der Anmeldung: 20.12.2000
(73) Patentinhaber: Case Harvesting Systems GmbH, 01844 Neustadt (DE)
(72) Erfinder: Bergmann, Thomas, 01844 Hohwald (DE); Berth, Dieter, 01844 Neustadt (DE)
(74) Vertreter: Müller, Lutz

(56) Entgegenhaltungen:
- BE-A- 668 196
- DE-A- 19 718 830
- DE-C- 19 538 370
- DE-U- 29 601 671
- GB-A- 2 219 967

## Beschreibung

Die Erfindung betrifft einen Antrieb für eine Kolbensammelpresse für landwirtschaftliche Erntegüter, wie beispielsweise Heu, Stroh, Welkgut, nachwachsende Rohstoffe und dergleichen, nach den Merkmalen im Oberbegriff des 1 Patentanspruches.

Ein derartiger Antrieb ist vorzugsweise für Kolbensammelpressen mit Schneidrotor vorgesehen, weil der heute häufig anzutreffende Einsatz von Schneidrotoren durch deren hohe Leistungsaufnahme die Anforderungen an ein Antriebskonzept völlig verändert hat. Das Problem solcher Antriebe besteht insbesondere darin, für die einzelnen Arbeitsorgane der Kolbensammelpresse einen sicheren Überlastschutz zu bieten. Solche Antriebe sind bereits in mehreren Ausführungsvarianten bekannt geworden.
So ist beispielsweise in der DE 296 01 671 U1 ein Antrieb für eine Kolbensammelpresse beschrieben, bei dem von einer Getriebeausgangswelle des Hauptgetriebes zwei Abtriebswellen unter Zwischenschaltung je einer Überlastkupplung abgeleitet werden. Die eine Abtriebswelle treibt einen Raffer zur Befüllung und anschließenden Entleerung des Zuführkanals an und die andere die zur Zuführeinrichtung gehörenden Arbeitsorgane Schneidrotor, Querförderschneckenstücke und Aufnahme- bzw. Mäheinrichtung. Die Überlastkupplung für den Raffer ist dabei als Keilschaltkupplung ausgebildet, welche bei einem vorbestimmbaren Drehmoment ausschaltet und erst nach dem Absinken der Drehzahl der Abtriebswelle den Raffer wieder zuschaltet. Die andere Überlastkupplung für die Zuführeinrichtung schaltet neben ihrer normalen Schutzfunktion auch dann ab, wenn die Keilschaltkupplung für den Raffer abgeschaltet hat, wozu beide Überlastkupplungen aber über geeignete Mittel in Wirkverbindung stehen müssen. Sie schaltet erst dann wieder ein, wenn die Keilschaltkupplung eingeschaltet ist und die Abtriebswelle zum Antrieb des Raffers wieder ihre Betriebsdrehzahl erreicht hat. Mögliche Ausführungsarten dieser Überlastkupplung können eine Elektromagnetkupplung bzw. eine hydraulisch oder mechanisch schaltbare Überlastkupplung sein, weil es hier nicht auf einen synchronen Antrieb mit irgendwelchen anderen Arbeitsorganen der Kolbensammelpresse ankommt. Zur Erfüllung der hier dargestellten Funktionsweise ist es noch notwendig, dem Raffer einen Drehzahlwächter zuzuordnen, der beim Absinken der Betriebsdrehzahl des Raffers die Überlastkupplung für die Arbeitsorgane der Zubringereinrichtung ausschaltet.
Diese Funktionsbeschreibung läßt erkennen, daß insbesondere durch die für das Zusammenwirken beider Überlastkupplungen notwendigen technischen Mittel die Herstellungskosten für den Antrieb insgesamt relativ hoch sind. Des weiteren erhöht sich durch die Vielzahl der dafür notwendigen Teile die Störanfälligkeit der Kolbensammelpresse, so daß deren effektive Einsatzzeit auf dem Feld sinkt. Der Hauptnachteil dieses Antriebes ist jedoch, daß im Überlastfall der Raffer und die Zuführeinrichtung stehenbleiben, so daß dem Bediener der Kolbensammelpresse nichts anderes übrig bleibt, als die Verstopfungen in mühevoller Handarbeit zu beseitigen.
Mit der DE 195 38 370 C1 ist eine andere Ausführungsvariante eines Antriebes für eine Kolbensammelpresse mit einem Rotorförderer zum Befüllen und Entleeren des Zuführkanals und einer diesem in Flußrichtung des Erntegutes gesehen vorgeordneten Zuführeinrichtung, die hier ebenfalls aus einem Schneidrotor, zwei Querförderschneckenstücken und einer Aufnahme- bzw. Mäheinrichtung besteht. Die Kolbensammelpresse ist mit einem Hauptgetriebe ausgestattet, dessen mit einer Schwungscheibe verbundene Getriebeeingangswelle von einem Traktor mit Gelenkwelle angetrieben wird. Auf eine mit relativ hoher Drehzahl rotierende Getriebeausgangswelle ist ein als Kegelradgetriebe ausgebildetes Verteilergetriebe aufgesteckt, dessen eine Ausgangswelle mit einer Gelenkwelle verbunden ist. Das andere Ende der Gelenkwelle steht über eine Überlastkupplung mit der Eingangswelle eines auf der Welle des Rotorförderers befestigten weiteren Kegelradgetriebes in Verbindung, wodurch der Rotorförderer angetrieben wird. Letzteres Kegelradgetriebe weist außerdem noch eine Kegelradausgangswelle auf, auf die einenends eine Gelenkwelle mit integrierter Überlastkupplung aufgesteckt ist und die anderenends mit einer Kegelradeingangswelle eines auf der Welle des Schneidrotors sitzenden Kegelradgetriebes verbunden ist. Die beiden Querförderschneckenstücken und die Aufnahme- bzw. Mäheinrichtung werden vom Schneidrotor reihenschaltungsmäßig angetrieben.
Obwohl dieses Antriebskonzept durch die Vorgabe bestimmter Ansprechmomente der Überlastkupplungen einen sicheren Überlastschutz für den Rotorförderer und die Zuführeinrichtung bietet und kostenintensive Wirkverbindungen zwischen beiden Überlastkupplungen nicht erforderlich sind, ist auch hier zu bemängeln, daß im Falle des Verstopfens nach dem Ansprechen der antriebsmäßig vor dem Rotorförderer angeordneten Überlastkupplung dieser sich nicht mehr selbst freiräumen kann. Durch die antriebsmäßige Reihenschaltung zwischen Rotorförderer und Zuführeinrichtung gilt natürlich das gleiche für die Zuführeinrichtung, so daß der Bediener der Kolbensammelpresse Verstopfungen im Zuführkanal und/oder in der Zuführeinrichtung manuell beseitigen muß: Ein weiterer Nachteil ist, daß der Rotorförderer immer dann einer ständigen Überlastung ausgesetzt ist, wenn die mit dem Schneidrotor zusammenwirkenden Schneidmesser aus dem Zuführkanal ausgeschwenkt wurden, wodurch der Schneidrotor dann fast keine Antriebsleitung mehr aufnimmt und die gesamte zur Verfügung stehende Antriebsleistung allein auf den Rotorförderer aufgrund des relativ hohen Ansprechmoments der ersten Überlastkupplung einwirken kann.
Mit der DE 197 18 830 A1 ist noch eine dritte Ausführungsvariante eines Antriebes für eine Kolbensammelpresse bekannt geworden, die im Prinzip mit der Lösung nach der DE 296 01 671 U1 übereinstimmt. Sie ist jedoch gegenüber dieser dahingehend weiterentwickelt worden, indem die Antriebe für die Schwungscheibe, den Raffer und die Zuführeinrichtung mit Schaltkupplungen ausgestattet sind, die als automatisch auslösende Überlastkupplungen ausgebildet sind. Diese Schaltkupplungen werden von einem System zur Überwachung und Steuerung der Arbeitsfunktionen auch ohne Überlastsicherung nur durch eine Drehzahlkontrolle so geschaltet, daß eine Überlastung weitestgehend vermieden wird. Die Überwachung der Drehzahlen erledigen Drehzahlsensoren, deren Werte an eine Auswerteelektronik weitergeleitet werden. Bei überschrittenen Grenzdrehzahlen werden die Schaltkupplungen abgeschaltet und umgekehrt auch wieder zugeschaltet. Zusätzlich zu den Schaltsignalen können an bestimmte Arbeitsorgane Stellsignale übermittelt werden, wie zum Beispiel das Ausschwenken der Schneidmesser aus dem Zuführkanal bei der Abschaltung des Schneidrotors.
Obwohl diese Ausführungsvariante gegenüber der nach der DE 296 01 671 U1 weiter vervollkommnet wurde, sind die dafür eingesetzten Mittel relativ kostenintensiv in der Herstellung, weil neben Überlast- bzw. Schaltkupplungen noch Drehzahlwächter sowie das beschriebene Überwachungs- und Steuersystem notwendig sind. Außerdem verbleibt der Hauptnachteil dieses Antriebskonzeptes, daß im Falle des Verstopfens des Raffers und/oder des Zuführsystems infolge eines plötzlichen Überangebotes an Erntegut alles stehenbleibt, so daß der Bediener der Kolbensammelpresse die verstopfte Stelle manuell ausräumen muß.

Deshalb liegt der Erfindung die Aufgabe zugrunde, einen Antrieb für eine Kolbensammelpresse für landwirtschaftliche Erntegüter zu schaffen, der kostengünstig in der Herstellung ist und der auch bei einem sehr hohen Angebot an Erntegut sicherstellt, daß sich das Befüll- und Entleerungsorgan für den Zuführkanal unter allen Umständen selbst freiräumt. Diese Aufgabe wird gemäß der Erfindung durch die Merkmale des 1. Patentanspruches gelöst, wobei in den Unteransprüchen Merkmale aufgeführt sind, die diese Lösung in vorteilhafter Weise weiterentwickeln.
Durch die separaten Antriebsverbindungen einmal für das Befüll- und Entleerungsorgan und zum anderen für die das Erntegut zum Zuführkanal fördernde Zuführeinrichtung, bestehend aus wenigstens einer Aufnahme- bzw. Mäheinrichtung und einem Schneidrotor, kann jedes dieser Arbeitsorgane völlig unabhängig voneinander arbeiten. Die Einordnung einer Überlastkupplung in die Antriebsverbindung für die Zuführeinrichtung gewährleistet, daß diese vor der Zerstörung durch Überlastung infolge von Fremdkörpern oder eines zu hohen Erntegutangebotes bewahrt wird. Mit dem Ansprechen der Überlastkupplung bleibt die Zuführeinrichtung stehen und das Befüll- und Entleerungsorgan räumt den Zuführkanal frei. Da der zur Zuführeinrichtung gehörende Schneidrotor bis zum Eintreten des Überlastfalles den Erntegutstrom aber weitestgehend vergleichmäßigt und Fremdkörper sicher zurückhält, könnte das Befüll- und Entleerungsorgan höchstens mit einem langsam ansteigenden Überangebot an Erntegut überfordert werden. Um das zu verhindern, befindet sich in seiner Antriebsverbindung lediglich eine die Belastung des Befüll- und Entleerungsorganes erfassende und damit die Funktion einer Überlastkupplung übernehmende Meßeinrichtung, die mit einem hinter dem Schneidrotor angeordneten Schaltelement in der Antriebsverbindung der Zuführeinrichtung in funktioneller Wirkverbindung steht. Wenn dann ein der Meßeinrichtung vorgegebener Maximalwert erreicht ist, schaltet ein Signal der Meßeinrichtung mittels des Schaltelementes wenigstens die Aufnahme- bzw. Mäheinrichtung der Zuführeinrichtung ab, wodurch der Erntegutfluß zum Befüll- und Entleerungsorgan sofort unterbrochen wird Der Schneidrotor dreht sich durch genannte Anordnung des Schaltelements jedoch weiter. Analog wie beim Überlastfall der Zuführeinrichtung räumt nun auch das Befüll- und Entleerungsorgan den Zuführkanal frei. Wenn dann ein der Meßeinrichtung vorgegebener Minimalwert erreicht ist, schaltet dessen Signal das Schaltelement in der Antriebsverbindung der Zuführeinrichtung diese wieder zu und die Erntegutzufuhr wird fortgesetzt.
Es hat sich als zweckmäßig erwiesen, das Schaltelement als eine schaltbare Blockiereinrichtung auszubilden, die sich in der reihenschaltungsmäßig ausgebildeten Antriebsverbindung der Zuführeinrichtung, bestehend aus Schneidrotor, Querförderschneckenstücken und Aufnahme- bzw. Mäheinrichtung, zwischen dem Schneidrotor und den Querförderschneckenstücken befindet. Dadurch kommt es zu einem sofortigen Stillstand der Aufnahme- bzw. Mäheinrichtung und der Querförderschneckenstücken beim Ansprechen der Blokkiereinrichtung, ohne daß der relativ schwere Schneidrotor angehalten werden muß. Für das erneute Ingangsetzen der Aufnahme- bzw. Mäheinrichtung und der Querförderschneckenstücken nach dem Lösen der Blockiereinrichtung ist diese Lösung deshalb vorteilhaft, weil dann der Schneidrotor nicht beschleunigt werden muß.
Es hat sich aber ebenso bewährt, als Schaltelement in der Antriebsverbindung der Zuführeinrichtung eine schaltbare Kupplung einzusetzen, die lediglich den Antrieb in Abhängigkeit der Meßwerte der Meßeinrichtung am Befüll- und Entleerungsorgan ab- oder zuschaltet. Bei deren Anordnung an der gleichen Stelle wie die vorstehend beschriebene Blockiereinrichtung verringert sich die Zeit bis zum Stillstand der Aufnahme- bzw. Mäheinrichtung und der Querförderschneckenstücken gegenüber der Lösung mit der Blockiereinrichtung nur unwesentlich.

Im Falle des Antriebes des Befüll- und Entleerungsorganes für den Zuführkanal, beispielsweise mit einem Kegelradgetriebe, hat es sich als zweckmäßig erwiesen, als Meßeinrichtung zur Erfassung der Belastung eine Drehmomentenstütze einzusetzen, die zwischen dem Gehäuse des Kegelradgetriebes und einem Festpunkt am Rahmen oder dem Preßkanal der Kolbensammelpresse angeordnet ist.
Der in der Drehmomentenstütze untergebrachte und mit Dehnmeßstreifen besetzte Kraftmeßbolzen verkörpert im direkten proportionalen Verhältnis die Belastung des Befüll- und Entleerungsorganes. Damit ist es relativ einfach, auf elektrischem Wege bei Erreichen einer vorgegebenen maximalen Belastung des Befüll- und Entleerungsorganes mittels des Schaltelementes in der Antriebsverbindung der Zuführeinrichtung die Erntegutzufuhr zu unterbrechen und bei Erreichen einer vorgegebenen minimalen Belastung die Erntegutzufuhr erneut aufzunehmen.
Als Befüll- und Entleerungsorgan für den Zuführkanal kann ein schwingender Raffer mit veränderbaren Förderkurven mit dem gleichen Erfolg wie ein Rotorförderer eingesetzt werden.
Eine weitere bevorzugte Möglichkeit zur Erfassung der Belastung des Befüllund Entleerungsorganes besteht darin, an der Koppel zum Verschwenken der Kurvenbahn an einem Rotorförderer eine Meßeinrichtung zur Aufnahme der in der Koppel auftretenden Zug-/Druckkräfte vorzusehen. Diese Zug-/Druckkräfte verkörpern deshalb die Belastung des Rotorförderers in direkt proportionaler Beziehung, weil die auf seine Zinkenwellen einwirkenden Reaktionskräfte aus der Erntegutförderung direkt auf die verschwenkbare Kurvenbahn und damit auf die sie verschwenkende Koppel weitergeleitet werden. Auch bei dieser Lösung bietet es sich an, als Meßeinrichtung einen Kraftmeßbolzen einzusetzen. Die Verarbeitung seiner Signale mit vorgegebenen maximalen und minimalen Belastungswerten zur Betätigung des Schaltelementes in der Antriebsverbindung der Zuführeinrichtung gestaltet sich analog wie beim Einsatz einer Dehmomentenstütze.
Damit wären als Vorteile der Erfindung zu nennen, daß sie aufgrund der Einsparung einer Überlastkupplung in der Antriebsverbindung zum Befüll- und Entleerungsorgan kostengünstig in der Herstellung ist. Ein aufwendiges System zur Überwachung und Steuerung der Arbeitsfunktionen sowie Drehzahlwächter an den Antriebselementen sind durch die Einfachheit der Erfindung ebenfalls nicht notwendig. Darüber hinaus ist sichergestellt, daß sich das Befüll- und Entleerungsorgan unter allen Umständen selbst freiräumt, weil es aufgrund der erfindungsgemäßen Antriebsgestaltung niemals vom Antrieb getrennt wird, so daß es stets vor dem Überlastfall durch Fortsetzung seiner normalen Arbeitsfunktion den Zuführkanal freiräumt. Durch das ständige Weiterlaufen des Schneidrotors entfällt außerdem ein zeitaufwendiges und energieverbrauchendes Hochdrehen des Schneidrotors.

Die Erfindung soll nun anhand von zwei Ausführungsbeispielen näher erläutert werden, wobei die einzelnen Figuren zeigen:
- Fig. 1:: eine Seitenansicht auf die in Fahrtrichtung gesehene linke Seite einer Kolbensammelpresse ohne Verkleidungsteile
- Fig. 2:: eine Vorderansicht auf die Antriebsteile der Kolbensammelpresse mit weggelassener Schwungscheibe
- Fig. 3:: einen Schnitt A-A nach Fig. 1
- Fig. 4:: eine Ansicht B nach Fig. 2
- Fig. 5:: eine Seitenansicht auf die in Fahrtrichtung gesehene rechte Seite einer Kolbensammelpresse in einer geänderten Antriebsvariante
- Fig. 6:: eine Vorderansicht der Kolbensammelpresse nach Fig. 5

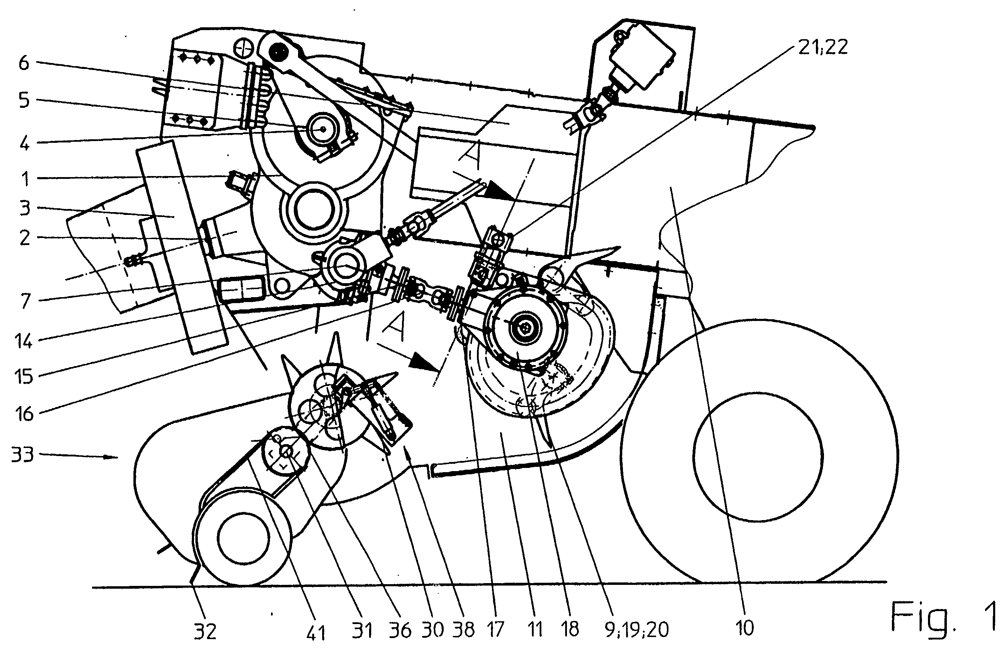

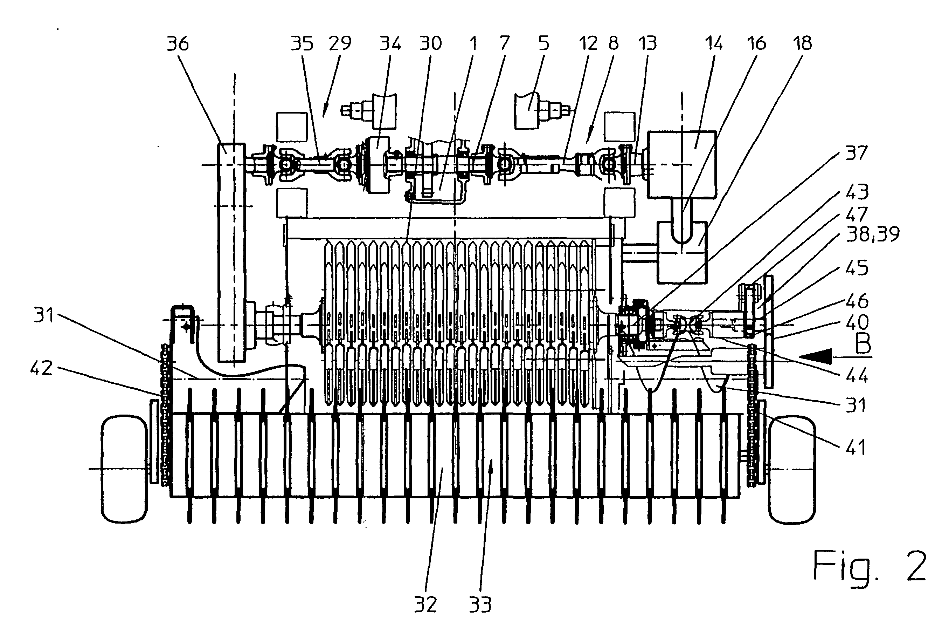

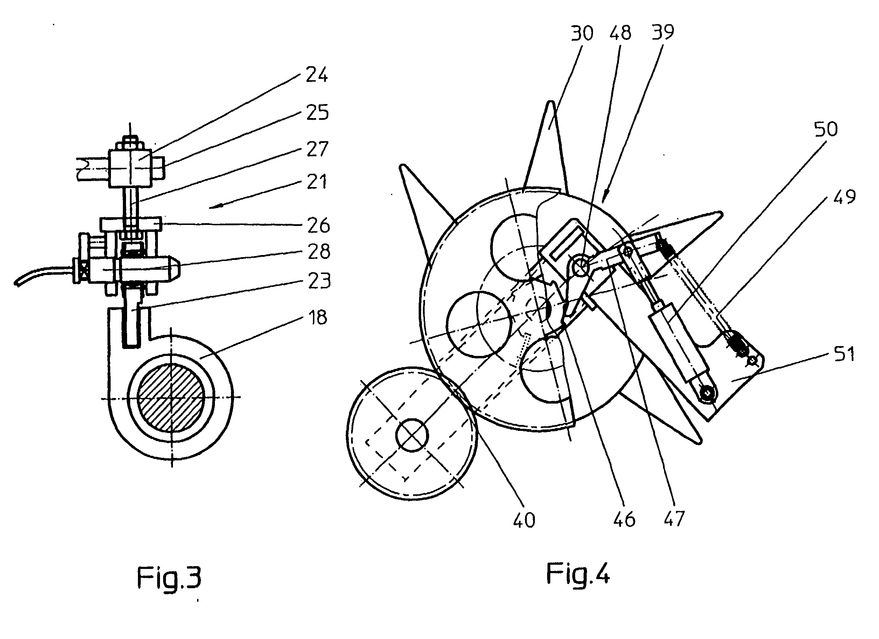

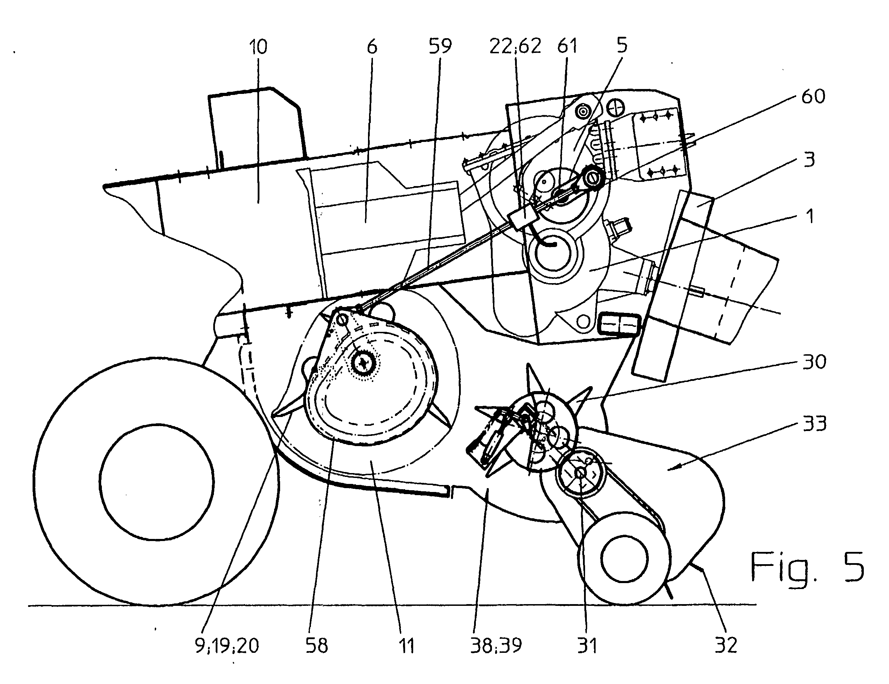

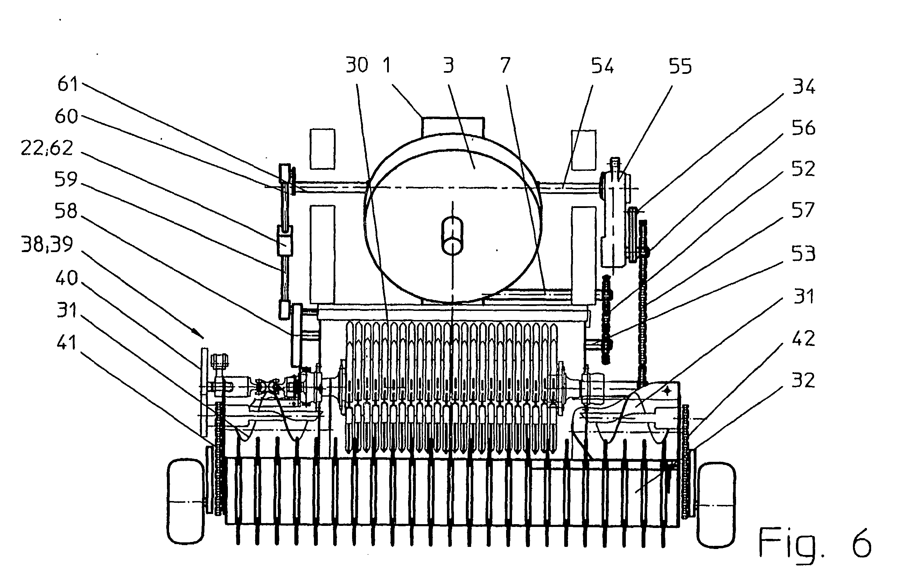

In einer ersten Ausführungsvariante eines Antriebes weist die Kolbensammelpresse nach den Figuren 1 bis 4 in Fahrtrichtung gesehen vom ein Hauptgetriebe 1 auf, dessen Eingangswelle 2 gemeinsam mit einer Schwungscheibe 3 von einer geeigneten Antriebsquelle angetrieben wird, was in der Regel ein Traktor mit Gelenkwelle ist. Dieses Hauptgetriebe 1 hat eine erste Ausgangswelle 4 für den Kurbelantrieb 5 zum Antrieb des Preßkolbens 6. Von einer zweiten Ausgangswelle 7 des Hauptgetriebes 1 führt eine Antriebsverbindung 8 zu einem Befüll- und Entleerungsorgan 9 für den vom Preßkanal 10 herabhängenden und nach vorn gekrümmten Zuführkanal 11. Die Antriebsverbindung 8 besteht hier aus einer mit der Ausgangswelle 7 verbundenen Gelenkwelle 12, die wiederum mit der Eingangswelle 13 eines Kegelradgetriebes 14 verbunden ist. Die Ausgangswelle 15 des Kegelradgetriebes 14 steht mit einer weiteren Gelenkwelle 16 in antriebsmäßiger Verbindung, die mit ihrem anderen Ende mit der Eingangswelle 17 eines weiteren Kegelradgetriebes 18 zum Antrieb des Befüll und Entleerungsorganes 9 gekoppelt ist. Das Befüll- und Entleerungsorgan 9 dieser Kolbensammelpresse ist als Rotorförderer 19 ausgebildet, der am Umfang mit drei Zinkenwellen 20 besetzt ist. Das Gehäuse des Kegelradgetriebes 18 ist über eine Drehmomentenstütze 21 mit dem Preßkanal 10 verbunden, in die eine Meßeinrichtung 22 zum Erfassen der Belastung des Rotorförderers 19 integriert ist. Figur 3 zeigt die Drehmomentenstütze 21 in vergrößerter Darstellung. Sie steckt einenends mit einem Haltestück 23 in einer Ausnehmung des Gehäuses des Kegelradgetriebes 18 und anderenends ist sie über ein Aufsteckteil 24, das einen am Preßkanal 10 angeschweißten Bolzen 25 umgreift, mit dem Preßkanal 10 verbunden. Das Aufsteckteil 24 und ein Gehäuseteil 26 sind mit Einstellschrauben 27 miteinander verbunden, die in beide Teile zu deren Abstandsveränderung eingeschraubt sind. Das Gehäuseteil 26 weist eine Querbohrung auf, in die ein mit Dehnmeßstreifen besetzter Kraftmeßbolzen 28 eingesteckt ist. Das Mittelstück des Kraftmeßbolzens 28 befindet sich in einer Bohrung des Haltestückes 23, wodurch die Verbindung zwischen dem Preßkanal 10 und dem Gehäuse des Kegelradgetriebes 18 hergestellt ist.
An der anderen Seite des Hauptgetriebes 1 ist an deren zweiten Ausgangswelle 7 eine weitere Antriebsverbindung 29 angeschlossen, die zum Antrieb der aus einem Schneidrotor 30, zwei Querförderschneckenstücken 31 und einer Aufnahme- bzw. Mäheinrichtung 32 bestehenden Zuführeinrichtung 33 dient. Die Antriebsverbindung 29 besteht in diesem Ausführungsbeispiel aus einer auf der zweiten Ausgangswelle 7 befestigten Überlastkupplung 34 für die Zuführeinrichtung 33, einer Gelenkwelle 35 und einem den Schneidrotor 30 antreibenden Stirnrädergetriebe 36. Auf der dem Stirnrädergetriebe 36 gegenüberliegenden Seite des Schneidrotors 30 ist auf dessen Welle 37 ein Schaltelement 38 befestigt, das in dem Fall als eine schaltbare Blockiereinrichtung 39 ausgebildet ist, die mit der Meßeinrichtung 22 für das Befüll- und Entleerungsorgan 9 in funktioneller Wirkverbindung steht. An die Blockiereinrichtung 39 schließt sich antriebsmäßig ein Stirnradtrieb 40 zum Antrieb des in Fahrtrichtung gesehenen linken Querförderschneckenstückes 31 an. Von da aus führt ein Kettentrieb 41 zur Aufnahmeeinrichtung 32 und von deren gegenüberliegender Seite ein weiterer Kettentrieb 42 zurück zum rechten Querförderschneckenstück 31.
Der Aufbau der Blockiereinrichtung 39 ist aus den Figuren 2 und 4 zu ersehen. Den Antrieb erhält die Blockiereinrichtung 39 von der Welle 37 des Schneidrotors 30, die mit einem Doppelgelenk 43 verbunden ist. Das andere Ende des Doppelgelenkes 43 ist mit der Nabe einer Ratschenkupplung 44 gekoppelt, in der die Welle 45 des großen Stirnrades des Stirnradtriebes 40 steckt. Außerhalb der Ratschenkupplung 44 trägt die Welle 45 ein mit Klinken besetztes Schaltrad 46, in das eine Sperrklinke 47 durch Verschwenken um einen Gelenkpunkt 48 einrasten kann. An der Sperrklinke 47 greifen mit dem einen Ende eine vorgespannte Zugfeder 49 und ein Hydraulikzylinder 50 an, deren andere Enden gelenkig an einem Gestellteil 51 der Kolbensammelpresse befestigt sind.
Die zweite Ausführungsvariante eines derartigen Antriebes für eine Kolbensammelpresse ist in den Figuren 5 und 6 gezeigt. Der Kurbelantrieb 5 für den Preßkolben 6 vom Hauptgetriebe 1 aus ist analog wie bei der ersten Ausführungsvariante ausgebildet. Der Antrieb für den als Befüll- und Entleerungsorgan 9 arbeitenden Rotorförderer 19 kommt von der zweiten Ausgangswelle 7 des Hauptgetriebes 1, von der ein Kettentrieb 52 direkt zur Welle 53 des Rotorförderers 19 ohne Zwischenschaltung irgend eines Überlastschutzes führt.
Auf der gleichen Seite der Kolbensammelpresse befindet sich eine vom Kurbelantrieb 6 abgeleitete Abtriebswelle 54, auf die ein Stirnradgetriebe 55 aufgesteckt ist. Auf dessen Ausgangswelle 56 befindet sich eine Überlastkupplung 34 antriebsmäßig vor einem zum Schneidrotor 30 führenden Kettentrieb 57. Die Fortführung des Antriebes für die Querförderschneckenstücken 31 und die Aufnahmeeinrichtung 32 ist analog wie bei der ersten Ausführungsvariante, wobei der einzige Unterschied in der spiegelbildlichen Anordnung der Antriebselemente einschließlich des als Blockiereinrichtung 39 ausgebildeten Schaltelements 38 liegt.
Der Rotorförderer 19 weist zur Erzeugung der zum Befüllen und Entleeren des Zuführkanals 11 notwendigen veränderbaren Förderkurven eine verschwenkbare Kurvenbahn 58 auf, die mit dem einen Ende einer Koppel 59 gelenkig verbunden ist. Das andere Ende der Koppel 59 steht mit einem Kurbeltrieb 60 in Verbindung, der seinen Antrieb von einer vom Kurbelantrieb 5 abgeleiteten Querwelle 61 erhält. In die Koppel 59 ist die Meßeinrichtung 22 in Form eines Kraftmeßbolzens 62 zur Erfassung der Zug-/Druckräfte in der Koppel 59 eingesetzt.

### Bezugszeichenzeile

- 1: Hauptgetriebe
- 2: Eingangswelle
- 3: Schwungscheibe
- 4: erste Ausgangswelle
- 5: Kurbelantrieb
- 6: Preßkolben
- 7: zweite Ausgangswelle
- 8: Antriebsverbindung
- 9: Befüll- und Entleerungsorgan
- 10: Preßkanal
- 11: Zuführkanal
- 12: Gelenkwelle
- 13: Eingangswelle
- 14: Kegelradgetriebe
- 15: Ausgangswelle
- 16: Gelenkwelle
- 17: Eingangswelle
- 18: Kegelradgetriebe
- 19: Rotorförderer
- 20: Zinkenwellen
- 21: Drehmomentenstütze
- 22: Meßeinrichtung
- 23: Haltestück
- 24: Aufsteckteil
- 25: Bolzen
- 26: Gehäuseteil
- 27: Einstellschraube
- 28: Kraftmeßbolzen
- 29: Antriebsverbindung
- 30: Schneidrotor
- 31: Querförderschneckenstück
- 32: Aufnahme- bzw. Mäheinrichtung
- 33: Zuführeinrichtung
- 34: Überlastkupplung
- 35: Gelenkwelle
- 36: Stirnrädergetriebe
- 37: Welle
- 38: Schaltelement
- 39: Blockiereinrichtung
- 40: Stirnradtrieb
- 41: Kettentrieb
- 42: Kettentrieb
- 43: Doppelgelenk
- 44: Ratschenkupplung
- 45: Welle
- 46: Schaltrad
- 47: Sperrklinke
- 48: Gelenkpunkt
- 49: Zugfeder
- 50: Hydraulikzylinder
- 51: Gestellteil
- 52: Kettentrieb
- 53: Welle
- 54: Abtriebswelle
- 55: Stirnradgetriebe
- 56: Ausgangswelle
- 57: Kettentrieb
- 58: Kurvenbahn
- 59: Koppel
- 60: Kurbeltrieb
- 61: Querwelle
- 62: Kraftmeßbolzen

## Patentansprüche

1. Antrieb für eine Kolbensammelpresse für landwirtschaftliche Erntegüter mit einem Hauptgetriebe (1), dessen Eingangswelle (2) gemeinsam mit einer Schwungscheibe (3) von einer geeigneten Antriebsquelle angetrieben wird und von dem aus eine Antriebsverbindung (8) zum Befüll- und Entleerungsorgan (9) für einen vom Preßkanal (10) herabhängenden und nach vorn gekrümmten Zuführkanal (11) und eine weitere Antriebsverbindung (29) mit einer Überlastkupplung (34) zu den das Erntegut zum Zuführkanal (11) befördernden Zuführeinrichtung (33), bestehend aus wenigstens einer Aufnahme- bzw. Mäheinrichtung (32 ) und einem Schneidrotor (30), vorgesehen sind, **dadurch gekennzeichnet, daß**
a) sich in der Antriebsverbindung (8) zum Befüll- und Entleerungsorgan (9) lediglich eine dessen Belastung erfassende und die Funktion einer Überlastkupplung übernehmende Meßeinrichtung (22) befindet,
b) in der Antriebsverbindung (29) der Zuführeinrichtung (33) ein Schaltelement (38) hinter dem Schneidrotor (30) angeordnet ist, das mit der Meßeinrichtung (22) so in funktioneller Wirkverbindung steht, daß bei Überlast in der Antriebsverbindung (8) des Befüll- und Entleerungsorgans (9) die Antriebsverbindung (29) der Zuführeinrichtung (33) unterbrochen wird und bei Unterschreiten des Überlastfalles die Antriebsverbindung (29) wiederhergestellt bzw. beibehalten wird.

2. Antrieb nach Anspruch 1, **dadurch gekennzeichnet, daß** das Schaltelement (38) eine schaltbare Blockiereinrichtung (39) ist, die sich in der reihenschaltungsmäßig ausgebildeten Antriebsverbindung (29) der Zuführeinrichtung (33) vor den Querförderschneckenstücken (31 ) und vor der Aufnahme- bzw. Mäheinrichtung (32) befindet.

3. Antrieb nach Anspruch 1, **dadurch gekennzeichnet, daß** das Schaltelement (38) eine schaltbare Kupplung ist, die sich in der reihenschaltungsmäßig ausgebildeten Antriebsverbindung (29) der Zuführeinrichtung (33) vor den Querförderschneckenstücken (31) und vor der Aufnahme- bzw. Mäheinrichtung (32) befindet.

4. Antrieb nach einem oder mehreren der Ansprüche 1 bis 3, **dadurch gekennzeichnet, daß** die Meßeinrichtung (22) zur Erfassung der Belastung des Befüll- und Entleerungsorganes (9) eine Drehmomentenstütze (21) ist, die zwischen dem antreibenden Kegelradgetriebe (18) und einem Festpunkt am Rahmen der Kolbensammelpresse angeordnet ist.

5. Antrieb nach einem oder mehreren der Ansprüche 1 bis 4, **dadurch gekennzeichnet, daß** das Befüll- und Entleerungsorgan (9) als schwingender Raffer mit veränderbaren Förderkurven einerseits zum Befüllen des Zuführkanals (11) und andererseits zu dessen Entleerung in den Preßkanal (10) ausgebildet ist.

6. Antrieb nach einem oder mehreren der Ansprüche 1 bis 5, **dadurch gekennzeichnet, daß** das Befüll- und Entleerungsorgan (9) als Rotorförderer (19) mit veränderbaren Förderkurven einerseits zum Befüllen des Zuführkanals (11) und andererseits zu dessen Entleerung in den Preßkanal (10) ausgebildet ist.

7. Antrieb nach einem oder mehreren der Ansprüche 1 bis 6, **dadurch gekennzeichnet, daß** das als Rotorförderer (19) ausgebildete Befüll- und Entleerungsorgan (9) zur Erzeugung der veränderbaren Förderkurven eine mittels einer Koppel (59) verschwenkbare Kurvenbahn (58) aufweist, an der die Meßeinrichtung (22) zur Erfassung der Zug-/Druckkräfte in der Koppel (59) als Maß für die Belastung des Rotorförderers (19) angeordnet ist.

8. Antrieb nach Anspruch 7, dadurch gekennnzeichnet, daß die Meßeinrichtung (22) zur Erfassung der Belastung des Rotorförderers (19) an der Koppel (59) ein Kraftmeßbolzen (62) ist.

## Claims

1. A drive for a piston baling press for agricultural crops with a main gearbox (1), the input shaft (2) of which is driven together with a flywheel (3) by a suitable drive source and from which a drive connection (8) to the filling and emptying device (9) for a feeder channel (11) hanging down from the pressing channel (10) and curved towards the front and a further drive connection (29) with an overload clutch (34) to the feeder device (33) conveying crop to the feeder channel (11), consisting of at least a pickup and mowing device (32) and a cutter rotor (30), is envisaged, **characterised in that**,
a) in the drive connection (8) to the filling and emptying device (9) there is merely a measuring device (22) for recording its loading and assuming the function of an overload clutch,
b) in the drive connection (29) to the feeder device (33) a switching element (38) is arranged behind the cutter rotor (30), which is in a functional working connection in with the measuring device (22), so that in the event of an overload in the drive connection (8) of the filling and emptying device (9) the drive connection (29) to the feeder device (33) is interrupted and when the loading falls below the overload threshold the drive connection (29) is restored or maintained.

2. A drive in accordance with claim 1, **characterised in that** the switching element (38) is a switchable blocking device (39), which is located in the serially arranged drive connection (29) to the feeder device (33) before the transverse auger pieces (31) and before the pickup and mowing device (32).

3. A drive in accordance with claim 1, **characterised in that** the switching element (38) is a switchable clutch, which is located in the serially arranged drive connection (29) to the feeder device (33) before the transverse auger pieces (31) and before the pickup and mowing device (32).

4. A drive in accordance with one or more of the claims 1 to 3, **characterised in that** the measuring device (32) for recording the loading of the filling and emptying device (9) is a torque support (21), which is arranged between the driving bevel gear box (18) and a fixed point on the frame of the piston baling press.

5. A drive in accordance with one or more of the claims 1 to 4, **characterised in that** the filling and emptying device (9) is designed as an oscillating grab with variable delivery curves on the one hand for filling the feeder channel (11) and on the other hand for emptying it into the pressing channel (10).

6. A drive in accordance with one or more of the claims 1 to 5, **characterised in that** the filling and emptying device (9) is designed as a rotary conveyor (19) with variable conveyor curves on the one hand for filling the feeder channel (11) and on the other hand for emptying it into the pressing channel (10).

7. A drive in accordance with one or more of the claims 1 to 6, **characterised in that** the filling and emptying device (9) designed as a (19) rotary conveyor (19), for the production of the variable conveyor curves possesses a curved track (58) which can swivel by means of a connecting rod (59), on which is arranged the measuring device (22) for recording the tensile and compression forces in the connecting rod (59) as a measure of the loading of the rotary conveyor (19).

8. A drive in accordance with claim 7, **characterised in that** the measuring device (22) for recording the loading of the rotary conveyor (19) at the connecting rod (59) is a force-measuring pin (62).

## Revendications

1. Entraînement destiné à une ramasseuse-presse à piston pour des produits de récolte agricoles avec une boîte de transmission principale (1), dont l'arbre d'entrée (2) est entraîné de concert avec un volant-moteur (3) par une source d'entraînement appropriée et à partir de laquelle un raccord de transmission (8) pour l'organe de remplissage et de vidange (9) pour un canal d'alimentation (11) descendant du canal de compression (10) et incurvé vers l'avant et un autre raccord de transmission (29) avec un dispositif de sécurité (34) pour le dispositif d'alimentation (33) transportant le produit de récolte au canal d'alimentation (11) sont pris, l'entraînement étant constitué d'au moins un dispositif de ramassage et de coupe (32) et d'un rotor de coupe (30), **caractérisé en ce que**
a) le raccord de transmission (8) pour l'organe de remplissage et de vidange (9) comporte simplement un dispositif de mesure (22) qui saisit sa charge et qui joue le rôle d'un dispositif de sécurité,
b) dans le raccord de transmission (29) du dispositif d'alimentation (33), un élément de commande (38) est disposé derrière le rotor de coupe (30) qui est en relation active et fonctionnelle avec le dispositif de mesure (22) de manière à ce que en cas de surcharge du raccord de transmission (8) de l'organe de remplissage et de vidange (9), le raccord de transmission (29) du dispositif d'alimentation (33) soit interrompu et que le raccord de transmission (29) soit rétabli
ou conservé lorsque le cas de surcharge n'est pas atteint.

2. Entraînement selon la revendication 1, **caractérisé en ce que** l'élément de commande (38) est un dispositif de blocage commutable (39) qui se trouve dans le raccord de transmission (29), monté en série, du dispositif d'alimentation (33) devant les éléments de la vis de transport transversale (31) et devant le dispositif de ramassage et de coupe (32).

3. Entraînement selon la revendication 1, **caractérisé en ce que** l'élément de commande (38) est un dispositif de blocage commutable (39) qui se trouve dans le raccord de transmission (29) disposé selon un montage en série du dispositif d'alimentation (33) devant les éléments de la vis de transport transversale (31) et devant le dispositif de ramassage et de coupe (32).

4. Entraînement selon une ou plusieurs des revendications 1 à 3, **caractérisé en ce que** le dispositif de mesure (22) pour la saisie de la charge de l'organe de remplissage et de vidange (9) est un support-couple (21) qui est disposé entre l'engrenage à pignons coniques (38) menant et un point fixe sur le châssis de la presse-ramasseuse à piston.

5. Entraînement selon une ou plusieurs des revendications 1 à 4, **caractérisé en ce que** l'organe de remplissage et de vidange (9) a la forme d'un javeleur oscillant avec des courbes de transport modifiables pour remplissage, d'une part, du canal d'alimentation (11) et d'autre part, pour sa vidange dans le canal de compression (10).

6. Entraînement selon une ou plusieurs des revendications 1 à 5, **caractérisé en ce que** l'organe de remplissage et de vidange (9) a la forme d'un transporteur rotatif (19) avec des courbes de transport modifiables, d'une part, pour le remplissage du canal d'alimentation (11) et d'autre part, pour sa vidange dans le canal de compression (10).

7. Entraînement selon une ou plusieurs des revendications 1 à 6, **caractérisé en ce que** l'organe de remplissage et de vidange (9) configuré comme transporteur rotatif (19) présente, pour la production des courbes de transport modifiables, un parcours incurvé (58) orientable au moyen d'une bielle (59), sur lequel le dispositif de mesure (22) pour la saisie des efforts de compression et de traction dans la bielle (59) est disposé comme mesure pour la charge du transporteur rotatif (19).

8. Entraînement selon la revendication 7, **caractérisé en ce que** le dispositif de mesure (22) pour la saisie de la charge du transporteur rotatif (19) sur la bielle (59) est un boulon dynamométrique (62)
